(19) Europäisches Patentamt
European Patent Office
Office européen des brevets

(11) **EP 0 831 623 B1**

(12) **EUROPÄISCHE PATENTSCHRIFT**

(45) Veröffentlichungstag und Bekanntmachung des Hinweises auf die Patenterteilung:
**18.12.2002 Patentblatt 2002/51**

(51) Int Cl.⁷: **H04L 25/06**

(21) Anmeldenummer: **97113863.1**

(22) Anmeldetag: **11.08.1997**

(54) **Einem Entscheider vorgeschalteter Hochpassfilter mit schaltbarer unterer Grenzfrequenz**

High pass filter, used before a decision circuit, with switchable lower cut-off frequency

Filtre passe-haut, emplyé en amont d'un circuit de décision, avec fréquence de coupure inférieure commutable

(84) Benannte Vertragsstaaten:
**CH FR GB IT LI NL SE**

(30) Priorität: **19.09.1996 DE 19638405**

(43) Veröffentlichungstag der Anmeldung:
**25.03.1998 Patentblatt 1998/13**

(73) Patentinhaber: SIEMENS AKTIENGESELLSCHAFT
80333 München (DE)

(72) Erfinder:
• **Bolze, Thomas, Dr.rer.nat.**
**80804 München (DE)**
• **Neidlinger, Stephan, Dr.-Ing.**
**80796 München (DE)**

(56) Entgegenhaltungen:
EP-A- 0 669 739          US-A- 4 339 727

• **PATENT ABSTRACTS OF JAPAN vol. 1995, no. 02, 31. März 1995 (1995-03-31) & JP 06 318909 A (ANRITSU CORP;OTHERS: 01), 15. November 1994 (1994-11-15)**

**Beschreibung**

In Punkt-zu-Multipunkt-Telekommunikationsnetzen (wie z.B. passiven optischen Netzen, Koaxialkabelnetzen, Funkstrecken mit Rückkanal), in denen mehrere (typisch z.B. 10 bis 100) dezentrale Telekommunikationsstellen (Teilnehmer) mit einer demgegenüber zentralen Telekommunikationsstelle kommunizieren, sind die Übertragungseigenschaften (Übertragungsfunktionen) der einzelnen Verbindungen von den einzelnen dezentralen Einrichtungen zur zentralen Einrichtung hin im allgemeinen unterschiedlich. Da die einzelnen Teilnehmer in der Regel unterschiedliche Entfernungen zur zentralen Einrichtung haben, werden die von den Teilnehmern her in der zentralen Einrichtung ankommenden Signale insbesondere von Teilnehmer zu Teilnehmer unterschiedliche Empfangspegel aufweisen.

Verfügt eine zentrale Einrichtung eines solchen Punkt-zu-Multipunkt-Telekommunikationsnetzes insoweit nur über einen Empfänger, müssen die von den Teilnehmern ausgesendeten Signalströme durch Vielfachzugriffsverfahren wie Funktionen-, Frequenz- oder Zeitmultiplex voneinander getrennt werden. Beim Zeitmultiplex, in dem sich Digitalsignalübertragung häufig abspielt, werden den Teilnehmern Zeitschlitze zugeteilt, in denen sie Digitalsignalbursts aussenden können. Von Teilnehmer zu Teilnehmer unterschiedliche Empfangspegel machen dabei in der Praxis (bei verrauschten Signalen) unterschiedliche Signal-Detektionsschwellen erforderlich; ohne entsprechende zusätzliche Maßnahmen ist eine Detektion der Signale nicht möglich.

Zur Erzielung eines zumindest angenähert einheitlichen Empfangssignalpegels von im NRZ-Format übertragenen Digitalsignalen kann man die Sendesignalpegel der einzelnen Teilnehmer entsprechend steuern, wie dies beispielsweise für die Steuerung der Sendelichtleistungen von dezentralen Einrichtungen in passiven optischen Netzen aus DE 41 25 075 A1 bekannt ist, oder man kann die von den einzelnen Teilnehmern her bei der zentralen Einrichtung auftretenden Empfangssignalpegel durch eine entsprechend schnelle Amplitudenregelung in der zentralen Einrichtung nachregeln. Beide Maßnahmen sind mit merklichem Aufwand verbunden. Aus DE 38 18 168 C2 ist ein optoelektrischer Empfänger zum Empfang von optischen Signalen einer optischen Übertragungsstrecke mit einer Empfangs-Fotodiode in Sperrrichtung, einem zu ihr in Serie geschalteten Arbeitswiderstand in Form einer in Durchlassrichtung betriebenen Diode und einem eingangsseitig mit dem Verbindungspunkt von Fotodiode und Arbeitswiderstand-Diode über einen Koppelkondensator verbundenen Verstärker bekannt, bei dem bei grosser Empfangslichtleistung die Arbeitswiderstand-Diode relativ niederohmig ist und somit den Fotodioden-Wechselstrom entsprechend gegen Masse ableitet, während bei kleiner Empfangslichtleistung die Arbeitswiderstand-Diode relativ hochohmig ist und somit der Fotodioden-Wechselstrom entsprechend unbeeinträchtigt am Verstärkereingang wirksam wirkt.

Alternativ zu solchen Pegelsteuerungen kann man eine Signalcodierung (insbesondere CMI) vorsehen, die den unteren Frequenzbereich ungenutzt lässt und somit eine Hochpassübertragung ermöglicht, durch die bei von Teilnehmer zu Teilnehmer unterschiedlichen Empfangspegeln im Verlaufe einer dem jeweiligen Nutzsignalburst vorangestellten Präambel von typischerweise 10 bis 40 Bit der von Teilnehmer zu Teilnehmer unterschiedliche Gleichstromanteil des jeweils vorhergehenden Bursts abgebaut wird, so daß die darauffolgenden Nutzsignale sich amplitudenentscheiden lassen. Bei CMI-Codierung verdoppelt sich allerdings die Schrittgeschwindigkeit und somit die Signalbandbreite, wodurch sich die Empfängerempfindlichkeit und (bei begrenzt verfügbarer Bandbreite) die Zahl der Nutzkanäle verringert und die erforderliche Signalverarbeitungsgeschwindigkeit verdoppelt.

Bei Übertragung von NRZ-Signalen sind in zu einem Digtalsignalentscheider führende Hochpassfilter aufweisenden Schaltungsanordnungen zum Empfang von Digitalsignalbursts mit jeweils vorangestellter Mehr-Bit-Präambel Hochpassfilter mit vergleichsweise niedriger unterer Grenzfrequenz erforderlich, da andernfalls längere Gleichsignalfolgen nicht zuverlässig detektiert werden können. Bei einer solchen niedrigen unteren Grenzfrequenz wird zum Abbau des Gleichstromanteils eines jeweils vorhergehenden Bursts allerdings eine vergleichsweise lange Zeit benötigt. Die Erfindung stellt sich nun die Aufgabe, eine Schaltungsanordnung anzugeben, die eine solche Diskrepanz vermeidet.

Aus EP-A-669 739 ist eine Schaltungsanordnung bekannt, bei der durch schaltbare Bandpassfilter unterschiedlicher Bandbreite der Gleichstromanteil von Präambel und nachfolgendem Digitalsignalburst mit unterschiedlicher Geschwindigkeit abgebaut werden können.

Die Erfindung betrifft eine Schaltungsanordnung zum Empfang von Digitalsignalbursts mit jeweils vorangestellter Mehr-Bit-Präambel mit einem zu einem Digtalsignalentscheider führenden Hochpassfilter zum Abbau von Gleichstromanteilen jeweils vorangehender Digitalsignalbursts insbesondere bei Multipunkt-zu-Punkt-Verbindungen; diese Schaltungsanordnung ist erfindungsgemäß dadurch gekennzeichnet, dass im Verlauf einer solchen Präambel ein Hochpassfilter mit einer höheren unteren Grenzfrequenz und im Verlauf des nachfolgenden Digitalsignalbursts ein Hochpassfilter mit einer niedrigeren unteren Grenzfrequenz wirksamgeschaltet ist.

Die Erfindung bringt den Vorteil mit sich, sowohl im Verlauf der Präambel vor Beginn eines Digitalsignalbursts den Gleichstromanteil des vorhergehenden Bursts schnell abbauen bzw. den Gleichstromanteil des neuen Bursts schnell aufbauen zu können und zugleich während des eigentlichen Digitalsignalbursts auch längere Gleichsignalfolgen sicher detektieren zu können.

Dabei kann in weiterer Ausgestaltung der Erfindung zu Beginn des Digitalsignalbursts ein Steuersignal zur Hochpassumschaltung aus einem Pilotton gewonnen werden, der vom Teilnehmer

zu Beginn seines Digitalsignalbursts ausgesendet wird und dessen Frequenz bei einer Nullstelle des für die Nutzsignalübertragung benutzten Codes oder ausserhalb des Spektrums des Nutzsignals liegt.

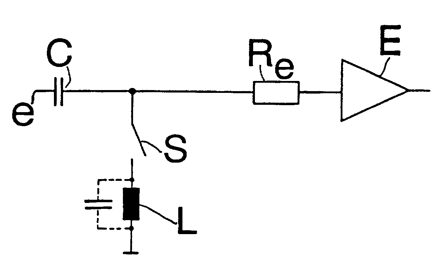

Weitere Besonderheiten der Erfindung werden aus der nachfolgenden näheren Erläuterung anhand der Zeichnung ersichtlich.

In der Zeichnung ist schematisch in einem zum Verständnis der Erfindung erforderlichen Umfang ein Ausführungsbeispiel einer Schaltungsanordnung gemäß der Erfindung zum Empfang von Digitalsignalbursts mit jeweils vorangestellter Mehr-Bit-Präambel dargestellt. Diese Schaltungsanordnung weist ein zu einem (in der Zeichnung nicht mehr im Einzelnen dargestellten) Digitalsignalentscheider E führendes umschaltbares Hochpassfilter mit einem Längs-Kondensator C und einer mittels eines Schalters S zu- bzw. abschaltbaren Quer-Spule L auf, das beim - Empfang von (am Schaltungseingang e auftretenden) Digitalsignalbursts mit jeweils vorangestellter Mehr-Bit-Präambel in Multipunkt-zu-Punkt-Verbindungen einen Abbau von Gleichstromanteilen jeweils vorangehender Digitalsignalbursts bewirkt.

Dabei ist zunächst im Verlauf einer solchen Präambel der Schalter S geschlossen, so dass der Kondensator C und die Spule L ein Hochpassfilter mit einer unteren 3-dB-Grenzfrequenz $f_{uh} = 1/\sqrt{LC}$ bilden, durch das Gleichanteile jeweils vorangehender Digitalsignalbursts relativ schnell abgebaut werden. So ergibt sich beispielsweise mit C = 0,5 nF und L = 350 nH eine untere Grenzfrequenz von 75 MHz, bei der bei einer Datenrate von z.B. 155 Mbit/s der Gleichanteil innerhalb weniger Bits auf- bzw. abgebaut wird.

Im Verlauf des nachfolgenden Digitalsignalbursts ist der Schalter S geöffnet, so dass der Kondensator C und der Eingangswiderstand $R_e$ des nachfolgenden Verstärkers bzw. Digitalsignalentscheiders ein Hochpassfilter mit einer - gegenüber der zuvor wirksamen höheren Grenzfrequenz $f_{uh}$ niedrigeren - unteren Grenzfrequenz $f_{un} = 1/2\pi R_e C$ bilden, bei der während des eigentlichen Digitalsignalbursts auch längere Gleichsignalfolgen sicher detektiert werden können. So ergibt sich zum Beispiel mit C = 0,5 nF und $R_e$ = kΩ eine untere Grenzfrequenz von 64 kHz, was bei einer Datenrate von im Beispiel 155 Mbit/s eine sichere Übertragung'von Daten im (ggf. gescrambelten) NRZ-Format ermöglicht.

Wenn die einzelnen Datenbursts nicht ausreichend genau zueinander synchronisiert sind, muß zu Beginn eines jeden Bursts der Takt rückgewonnen werden. Dies ist an sich (z.B. aus DE 195 11 403 A1) bekannt und bedarf hier insoweit keiner näheren Erläuterung. Die Taktrückgewinnung kann an sich erst nach dem Umschalten von der höheren unteren Grenzfrequenz auf die niedrigere untere Grenzfrequenz beginnen, da das Datensignal durch das Umschalten des Hochpassfilters von der höheren auf die niedrigere untere Grenzfrequenz im allgemeinen einen Phasensprung erfährt. Zusätzlich zur Spule L können nun aber weitere Kapazitäten und Induktivitäten parallel- bzw. in Serie geschaltet werden, so daß der Phasensprung gerade gleich einem gannzzahligen Vielfachen von 360° ist. So kann, wie dies auch in der Zeichnung angedeutet ist, die Spule L beispielsweise durch einen Parallel-Schwingkreis ersetzt sein, dessen Resonanzfrequenz bei der halben Taktfrequenz liegt. Die Taktrückgewinnung kann dann bereits vor dem Umschalten beginnen, so dass die Dauer der Präambel verkürzt und damit die Übertragungskapazität für die Digitalsignalbursts entsprechend erhöht werden kann.

**Patentansprüche**

1. Schaltungsanordnung zum Empfang von Digitalsignalbursts mit jeweils vorangestellter Mehr-Bit-Präambel mit einem zu einem Digtalsignalentscheider führenden Hochpassfilter zum Abbau von Gleichstromanteilen jeweils vorangehender Digitalsignalbursts, insbesondere bei Multipunkt-zu-Punkt-Verbindungen,
   **dadurch gekennzeichnet,**
   **dass** im Verlauf einer solchen Präambel ein Hochpassfilter mit einer höheren unteren Grenzfrequenz und im Verlauf des nachfolgenden Digitalsignalbursts ein Hochpassfilter mit einer niedrigeren unteren Grenzfrequenz wirksamgeschaltet ist.

2. Schaltungsanordnung nach Anspruch 1,
   **dadurch gekennzeichnet,**
   **dass** ein umschaltbares Hochpassfilter (C, L, $R_e$, S) mit einem Längs-Kondensator (C) und einer mittels eines Schalters (S) zu- bzw. abschaltbaren Quer-Spule (L) vorgesehen ist, wobei jeweils im Verlauf der Präambel bei geschlossenem Schalter (S) ein mit dem Kondensator (C) und der Spule (L) gebildetes Hochpassfilter mit der höheren unteren Grenzfrequenz wirksamgeschaltet ist und im Verlauf des jeweils nachfolgenden Digitalsignalbursts bei geöffnetem Schalter (S) ein mit dem Kondensator (C) und dem Eingangswiderstand ($R_e$) des nachfolgenden Schaltungsteils gebildetes Hochpassfilter mit der niedrigeren unteren Grenzfrequenz wirksamgeschaltet ist.

3. Schaltungsanordnung nach Anspruch 2,
   **dadurch gekennzeichnet,**
   **dass** zu einer Spule (L) weitere Kapazitäten und Induktivitäten parallel- bzw. in Serie geschaltet sind.

4. Schaltungsanordnung nach Anspruch 3,

**dadurch gekennzeichnet,**
**dass** die Spule (L) zu einem Parallel-Schwingkreis ergänzt ist, dessen Resonanzfrequenz bei der halben Digitalsignal-Taktfrequenz liegt.

5. Schaltungsanordnung nach einem der Ansprüche 1 bis 4,
**dadurch gekennzeichnet,**
**dass** das Hochpassfilter mit der niedrigeren unteren Grenzfrequenz nach Maßgabe eines vom Teilnehmer zu Beginn seines Digitalsignalbursts ausgesendeten Pilottons, dessen Frequenz bei einer Nullstelle des für die Nutzsignalübertragung benutzten Codes oder ausserhalb des Spektrums des Nutzsignals liegt, wirksamgeschaltet wird.

**Claims**

1. Circuit arrangement for receiving digital signal bursts, each preceded by a multibit preamble, having a high-pass filter leading to a digital signal decision-maker for reducing direct current components of respectively preceding digital signal bursts, in particular for multipoint-to-point connections,
**characterized**
**in that** a high-pass filter with a relatively high lower cut-off frequency is switched on in the course of such a preamble, and a high-pass filter having a relatively low lower cut-off frequency is switched on during the course of the subsequent digital signal burst.

2. Circuit arrangement according to Claim 1,
**characterized**
**in that** a switchable high-pass filter (C, L, $R_e$, S) is provided having a series capacitor (C) and a parallel coil (L), which can be switched on and off by means of a switch (S), are provided, with a high-pass filter which is formed by the capacitor (C) and the coil (L) and having a relatively high lower cut-off frequency being switched on in each case in the course of the preamble with the switch (S) closed, and a high-pass filter which is formed by the capacitor (C) and the input resistance ($R_e$) of the downstream circuit part and has the relatively low lower cut-off frequency being switched on in the course of the respectively subsequent digital signal burst with the switch (S) open.

3. Circuit arrangement according to Claim 2,
**characterized**
**in that** further capacitances and inductances are connected in parallel and/or in series with a coil (L).

4. Circuit arrangement according to Claim 3,
**characterized**
**in that** the coil (L) has a parallel tuned circuit added to it, whose resonant frequency occurs at half the digital signal clock frequency.

5. Circuit arrangement according to one of Claims 1 to 4,
**characterized**
**in that** the high-pass filter having the relatively low lower cut-off frequency is switched on on the basis of a pilot tone which is transmitted by the subscriber at the start of his digital signal burst and whose frequency occurs at a null point in the code which is used for user signal transmission, or occurs outside the spectrum of the user signal.

**Revendications**

1. Dispositif de circuits destiné à la réception de rafales de signaux numériques ayant chacune un préambule multibit, qui précède chacune d'elles, et comportant un filtre passe-haut, qui conduit à un circuit de décision à signal numérique, destiné à résorber des composantes courant continu de rafales du signal numérique qui précèdent dans chaque cas, en particulier dans les liaisons multipoints à point,
**caractérisé par le fait**
**que**, au cours d'un tel préambule, on insère un filtre passe-haut ayant une fréquence inférieure de coupure plus élevée et, dans le cours de la rafale suivante du signal numérique, un filtre passe-haut ayant une fréquence inférieure de coupure plus basse.

2. Dispositif de circuits selon la revendication 1
**caractérisé par le fait**
**qu'**il est prévu un filtre passe-haut commutable (C, L, Re, S) avec un condensateur longitudinal (C) et une bobine transversale (L), qui peut être mise en circuit ou hors circuit au moyen d'un commutateur (S), un filtre passe-haut, formé par le condensateur (C) et la bobine (L) et ayant la fréquence inférieure de coupure plus élevée, étant mis en circuit par la fermeture du commutateur (S) à chaque fois pendant le cours du préambule et un filtre passe-haut, formé par le condensateur (C) et la résistance d'entrée (Re) de la partie suivante du circuit et ayant la fréquence inférieure de coupure plus basse, étant mis en circuit par l'ouverture du commutateur (S) pendant le cours de chaque rafale suivante du signal numérique.

3. Dispositif de circuits selon la revendication 2
**caractérisé par le fait**
**que** d'autres capacités et inductances sont connectées en parallèle et/ou en série. sur une bobine (L).

4. Dispositif de circuits selon la revendication 3

**caractérisé par le fait**

**que** la bobine (L) est complétée par un circuit de résonance en parallèle dont la fréquence de résonance correspond à la moitié de la fréquence de cadence d'horloge du signal numérique.

5. Dispositif de circuits selon l'une des revendications 1 à 4
**caractérisé par le fait**
**que** le filtre passe-haut, qui a la fréquence inférieure de coupure plus basse, est commuté en circuit en fonction d'un signal pilote, envoyé par l'abonné au début de sa rafale du signal numérique et dont la fréquence se trouve à un point zéro du code utilisé pour la transmission du signal utile ou à l'extérieur du spectre du signal utile.